# EUROPEAN PATENT SPECIFICATION

(11) **EP 3 876 478 B1**
(45) Date of publication and mention of the grant of the patent: **01.05.2024**
(21) Application number: 20196020.0
(22) Date of filing: 14.09.2020
(51) Int. Cl.: H04L 43/50, H04L 41/0893, H04L 41/40, H04L 43/20, H04L 43/08, H04L 43/0811, H04L 43/0823, H04L 43/0817, H04L 43/0852, H04L 43/12

(54) **METHOD AND APPARATUS FOR MONITORING GLOBAL FAILURE IN VIRTUAL GATEWAY CLUSTER**
VERFAHREN UND VORRICHTUNG ZUR ÜBERWACHUNG DES GLOBALEN AUSFALLS IN EINEM VIRTUELLEN GATEWAY-CLUSTER
PROCÉDÉ ET APPAREIL DE SURVEILLANCE D'UNE DÉFAILLANCE GLOBALE DANS UN GROUPE DE PASSERELLES VIRTUELLES

(30) Priority: 03.03.2020 CN 202010139003
(43) Date of publication of application: 08.09.2021
(73) Proprietor: BEIJING BAIDU NETCOM SCIENCE AND TECHNOLOGY CO. LTD., 100085 Beijing (CN)
(72) Inventor: ZHANG, Hui, Beijing, 100085 (CN); WANG, Xuanjun, Beijing, 100085 (CN); HOU, Xiangyu, Beijing, 100085 (CN)
(74) Representative: Richly & Ritschel Patentanwälte PartG mbB

(56) References cited:
- US-A1- 2008 080 390
- US-A1- 2016 352 601
- US-A1- 2018 006 880
- US-B1- 7 209 968
- PAN TIAN ET AL: "LD-ICN: Towards Latency Deterministic Information-Centric Networking", 2019 IEEE 21ST INTERNATIONAL CONFERENCE ON HIGH PERFORMANCE COMPUTING AND COMMUNICATIONS; IEEE 17TH INTERNATIONAL CONFERENCE ON SMART CITY; IEEE 5TH INTERNATIONAL CONFERENCE ON DATA SCIENCE AND SYSTEMS (HPCC/SMARTCITY/DSS), IEEE, 10 August 2019 (2019-08-10), pages 973-980, XP033623753, DOI: 10.1109/HPCC/SMARTCITY/DSS.2019.00140 [retrieved on 2019-10-02]

## Description

### TECHNICAL FIELD

The present disclosure relates to the field of computer technology, and specifically to a method and apparatus for monitoring a global failure in a virtual gateway cluster.

### BACKGROUND

In large-scale cloud services, virtual gateway clusters are important forwarding devices in virtual networks. If all or some of the devices in a virtual gateway cluster fail, traffic passing through the cluster in all access scenarios may be affected, and in this regard, it is a global failure. In the operation and maintenance of the virtual gateway cluster, common global failures include: a constant failure, a probabilistic failure, an increase in packet loss rate, an increase in communication delay and interruption of a long connection. These failures directly affect the normal use of cloud hosts and cause huge losses to users. At present, a method for monitoring a device failure is to perform monitoring on each device in a virtual gateway cluster, including device hardware monitoring, software environment monitoring on the device, status monitoring on each service on the device, availability monitoring on each service on the device, traffic monitoring, etc. However, this method uses the each service on the device as a monitoring unit, which can find whether there is a problem with each service to a certain extent, but it is not possible to perceive whether the services cooperate properly. Because this method separately monitors the hardware layer, the software environment layer and the service layer, it cannot detect whether the entire device forwards normally. In addition, this monitoring method is to configure a single device, the normality of the entire virtual gateway cluster cannot be perceived.

When a virtual gateway cluster fails, if the network lacks rapid and effective means of perception, it may lengthen the impact time of the failure and seriously affect user experience and trust of the user in the cloud vendor. The rapid discovery of the global failures directly determines the impact time of the failures, therefore, the rapid discovery of the global failure in the virtual gateway cluster is extremely significant. Document US 7209968B1 discloses a system and method which enable efficient recovery of management of one or more network elements responsive to failure of a gateway responsible for managing such one or more network elements. In the method, operation of a plurality of distributed gateways that are each responsible for managing one or more network elements is monitored. Through such monitoring, failure of one of the distributed gateways may be efficiently detected, and responsive to detection of a failed gateway, management of the network element(s) for which such failed gateway had management responsibility may be efficiently recovered by allocating responsibility of management activities for which a detected failed gateway had responsibility to one or more available gateways.

In PAN TIAN ET AL: "LD-ICN: Towards Latency Deterministic Information-Centric Networking," a method for proactive routing of the probe packet is provided, in which source routing information is embedded into the probe packet header.

### SUMMARY

The present disclosure proposes a method and apparatus for monitoring a global failure in a virtual gateway cluster.

In a first aspect, an embodiment of the present disclosure provides a method for monitoring a global failure in a virtual gateway cluster according to independent claim 1.

In some embodiments, the analyzing the response data packet based on a preset monitoring index, to determine whether a global failure occurs in the target virtual gateway cluster, includes: extracting monitoring data corresponding to the monitoring index in the response data packet based on the preset monitoring index; and analyzing the monitoring data to determine whether the global failure occurs in the target virtual gateway cluster.

In some embodiments, the global failure includes at least one of: a constant network failure, a network probabilistic failure, an increase in network packet loss rate, an increase in network communication delay, or a network long connection interruption.

In some embodiments, the method further included: sending global failure information of the target virtual gateway cluster to an alarm device using an internal network of the target virtual gateway cluster and an external network of the target virtual network cluster, in response to determining that the global failure occurs in the target virtual gateway cluster.

In a second aspect, an embodiment of the present disclosure provides an apparatus for monitoring a global failure in a virtual gateway cluster according to independent claim 5.

In some embodiments, the determination unit includes: an extraction subunit, configured to extract monitoring data corresponding to the monitoring index in the response data packet based on the preset monitoring index; and a determination subunit, configured to analyze the monitoring data to determine whether the global failure occurs in the target virtual gateway cluster.

In some embodiments, the global failure includes at least one of: a constant network failure, a network probabilistic failure, an increase in network packet loss rate, an increase in network communication delay, or a network long connection interruption.

In some embodiments, the apparatus further included: a sending unit, configured to send global failure information of the target virtual gateway cluster to an alarm device using an internal network of the target virtual gateway cluster and an external network of the target virtual network cluster, in response to determining that the global failure occurs in the target virtual gateway cluster.

In a third aspect, an embodiment of the present disclosure provides a computer readable medium, storing a computer program thereon, where the computer program, when executed by a processor, implements any implementation of the method according to the first aspect.

According to the method and apparatus for monitoring a global failure in a virtual gateway cluster provided by embodiments of the present disclosure, by setting a network probe in a target monitoring scenario, collecting a response data packet sent by the sending end probe to the receiving end probe via a target virtual gateway cluster, and analyzing the response data packet based on a preset monitoring index to determine whether a global failure occurs in the target virtual gateway cluster, global failure in the virtual gateway cluster is monitored. By determining the target virtual gateway cluster based on the target monitoring scenario, global failure monitoring of the target virtual gateway cluster is more real and detailed. Compared with the existing technology, whether the service cooperation and device forwarding in a virtual gateway cluster is normal, and whether the entire virtual gateway cluster is normal may be monitored; and by setting the network probe in the target monitoring scenario, a failure problem of the virtual gateway cluster during network application may be directly and quickly discovered before the user. Compared with the existing technology where a failure point of each gateway is separately judged and then summarized and analyzed to find the failure problem, the speed of failure discovery is improved, and the efficiency of failure processing is further improved.

### BRIEF DESCRIPTION OF THE DRAWINGS

After reading detailed descriptions of non-limiting embodiments with reference to the following accompanying drawings, other features, objectives and advantages of the present disclosure will become more apparent.
Fig. 1 is a diagram of an example system architecture in which some embodiments of the present disclosure may be implemented;
Fig. 2 is a flowchart of a method for monitoring a global failure in a virtual gateway cluster according to an embodiment of the present disclosure;
Fig. 3 is a schematic diagram of an application scenario of the method for monitoring a global failure in a virtual gateway cluster according to an embodiment of the present disclosure;
Fig. 4 is a flowchart of the method for monitoring a global failure in a virtual gateway cluster according to another embodiment of the present disclosure;
Fig. 5 is a schematic structural diagram of a system for monitoring a global failure in a virtual gateway cluster according to an embodiment of the present disclosure;
Fig. 6 is a schematic structural diagram of an apparatus for monitoring a global failure in a virtual gateway cluster according to an embodiment of the present disclosure; and
Fig. 7 is a schematic structural diagram of an electronic device suitable for implementing embodiments of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that some embodiments in the present disclosure and some features in the disclosure may be combined with each other on a non-conflict basis. Features of the present disclosure will be described below in detail with reference to the accompanying drawings and in combination with embodiments.

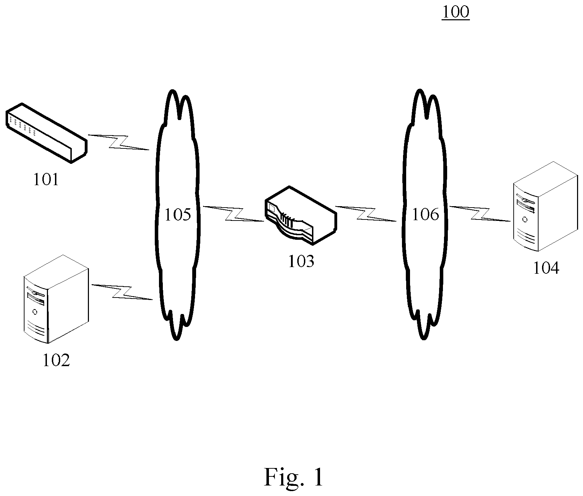

Fig. 1 illustrates an example system architecture 100 in which a method and apparatus for monitoring a global failure in a virtual gateway cluster according to embodiments of the present disclosure may be implemented.

As shown in Fig. 1, the system architecture 100 may include physical servers 101, 102, a virtual gateway cluster device 103, a server 104, and networks 105, 106. The network 105 serves as a medium providing a communication link between the physical servers 101 and 102 and the virtual gateway cluster device 103. The network 106 serves as a medium providing a communication link between the virtual gateway cluster device 103 and the server 104. The networks 105 and 106 may include various types of connections, such as wired or wireless communication links, or optic fibers.

The physical servers 101 and 102 interact with the server 104 via the virtual gateway cluster device 103 through the networks 105 and 106 to receive or send messages or the like. The physical servers 101 and 102 may be provided with network probes.

The virtual gateway cluster device 103 may be hardware or software. When the virtual gateway cluster device 103 is software, the virtual gateway cluster device may be installed in the physical servers 101, 102 or the server 104. The virtual gateway cluster device may be implemented, for example, as a plurality of software programs or software modules for providing distributed services, or as a single software program or software module. The present disclosure is not specifically limited herein.

The server 104 may be a cloud server that provides various services, for example, a cloud server that provides support for service requests of the physical servers 101 and 102. The cloud server may monitor data such as the received service requests, and feedback a monitoring result (such as global failure information of the virtual gateway cluster) to the physical servers. The server 104 may be provided with a network probe.

It should be noted that the method for monitoring a global failure in a virtual gateway cluster provided by embodiments of the present disclosure is generally performed by the server 104. Correspondingly, the apparatus for monitoring a global failure in a virtual gateway cluster is generally provided in the server 104.

It should be noted that the server may be hardware or software. When the server is hardware, the server may be implemented as a distributed server cluster composed of a plurality of servers, or as a single server. When the server is software, the server may be implemented, for example, as a plurality of software programs or software modules for providing distributed services, or as a single software program or software module. The present disclosure is not specifically limited herein.

It should be understood that the numbers of physical servers, networks, virtual gateway cluster devices and servers in Fig. 1 are merely illustrative. Depending on the implementation needs, there may be any number of physical servers, networks, virtual gateway cluster devices and servers.

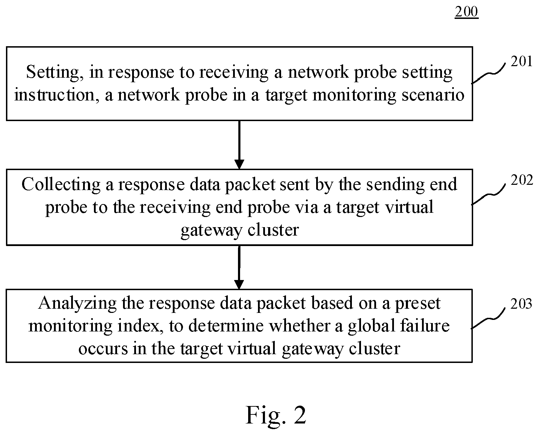

With further reference to Fig. 2, a flow 200 of a method for monitoring a global failure in a virtual gateway cluster according to an embodiment of the present disclosure is illustrated. The method for monitoring a global failure in a virtual gateway cluster includes the following steps.

Step 201, setting, in response to receiving a network probe setting instruction, a network probe in a target monitoring scenario.

In the present embodiment, an executing body (for example, the server shown in Fig. 1) on which the method for monitoring a global failure in a virtual gateway cluster is performed may receive a service instruction from a terminal device through a wired or wireless connection. When the network probe setting instruction is received, the executing body sets the network probe in the target monitoring scenario, where the network probe includes a sending end probe and a receiving end probe. The target monitoring scenario may be obtained by selection by a user after analyzing a data flow flowing through the virtual gateway cluster based on a support function of a target virtual gateway cluster. The network probe may be set in the target monitoring scenario or may be preset in the target monitoring scenario. It should be noted that the wireless connection may include but is not limited to 3G/4G connection, WiFi connection, Bluetooth connection, WiMAX connection, Zigbee connection, UWB (ultra wideband) connection, and other wireless connections that are now known or to be developed in the future.

Step 202, collecting a response data packet sent by the sending end probe to the receiving end probe via a target virtual gateway cluster.

In the present embodiment, based on the set network probe, the executing body collects the response data packet sent by the sending end probe to the receiving end probe via the target virtual gateway cluster, where the target virtual gateway cluster is determined based on the target monitoring scenario. The target virtual gateway in the target virtual gateway cluster may be a virtual gateway through which the response data packet flows in the target virtual gateway cluster. The target virtual gateway in the target virtual gateway cluster may be selected and obtained by a switch analyzing virtual gateways in the target virtual gateway cluster using a hash function according to the target monitoring scenario.

For example, according to each access scenario, the user analyzes the virtual gateway cluster flowing through in the access scenario, analyzes the number of network devices, the reliability of the network device, and a failure rate of simultaneous network device failures in the access scenario, selects an access scenario as the target monitoring scenario, and then sets a network probe in this access scenario. For example, the set network probe includes: 2 cloud hosts deployed as severs and 4 cloud hosts deployed as clients, where 2 cloud hosts deployed as severs are used as sending end probes, and 4 cloud hosts deployed as clients are used as receiving end probes. Response data packets received by the 4 cloud hosts deployed as clients in the process of the 2 cloud hosts deployed as severs accessing the 4 cloud hosts deployed as clients are collected.

Step 203, analyzing the response data packet based on a preset monitoring index, to determine whether a global failure occurs in the target virtual gateway cluster.

In the present embodiment, the executing body may analyze the collected response data packet based on the monitoring index, to determine whether the global failure occurs in the target virtual gateway cluster. The monitoring index may be preset. For example, the monitoring index may include at least one of: a packet loss rate, a delay, a response time, or an interruption rate. Based on the preset monitoring index, the response data packet is analyzed and judged, and the monitoring status of the virtual gateway cluster is directly and quickly located.

In some alternative implementations of the present embodiment, the analyzing the response data packet based on a preset monitoring index, to determine whether a global failure occurs in the target virtual gateway cluster, includes: extracting monitoring data corresponding to the monitoring index in the response data packet based on the preset monitoring index; and analyzing the monitoring data to determine whether the global failure occurs in the target virtual gateway cluster.

In some alternative implementations of the present embodiment, the global failure includes at least one of: a constant network failure, a network probabilistic failure, an increase in network packet loss rate, an increase in network communication delay, or a network long connection interruption.

Here, when determining whether the network constantly fails, response times of the data packets of the target virtual gateways in the virtual gateway cluster may be monitored based on the network probe in the target monitoring scenario. If the response times of all the target virtual gateway data packets exceed a specified value (for example, the response time is greater than 10s), it is considered that the network constantly fails.

In addition, when determining whether the network probabilistically fails, response times of the data packets of the target virtual gateways in the virtual gateway cluster may be monitored based on the network probe in the target monitoring scenario. If the response times of part of the target virtual gateway data packets exceed a specified limiting value, it is considered that the network probabilistically fails.

In addition, when determining whether the network packet loss rate increases, a packet loss rate index of the data packet of the target virtual gateway in the virtual gateway cluster may be monitored based on the network probe in the target monitoring scenario. If the packet loss rate index is greater than a specified value (for example, the packet loss rate is greater than 20%), it is considered that the network packet loss rate increases.

In addition, when determining whether the network communication delay increases, a delay index of the data packet of the target virtual gateway in the virtual gateway cluster may be monitored based on the network probe in the target monitoring scenario. If the delay index is greater than a specified value (for example, the delay exceeds 300ms), it is considered that the network communication delay increases.

In addition, when determining whether the network long connection is interrupted, an interruption rate index of the data packet of the target virtual gateway in the virtual gateway cluster may be monitored based on the network probe in the target monitoring scenario. If the interruption rate index is greater than a specified value (for example, the interruption rate is greater than 30%), it is considered that the network long connection is interrupted in large quantities.

It should be noted that the above analysis method is a well-known technology that has been widely studied and applied at present, and detailed description thereof will be omitted.

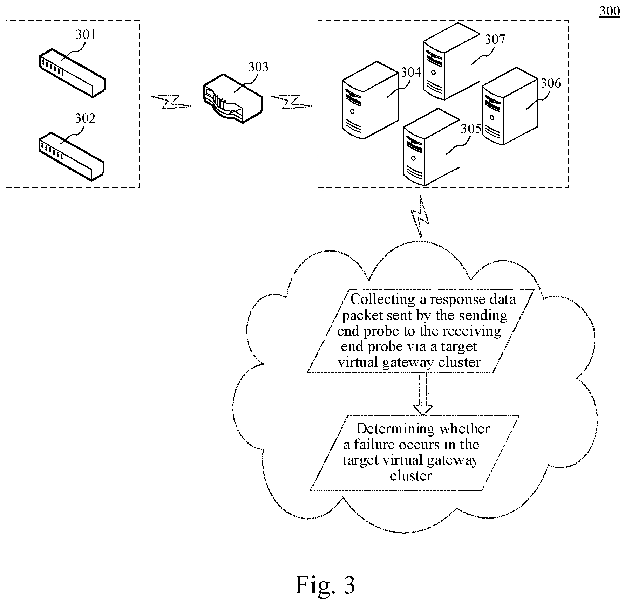

With further reference to Fig. 3, Fig. 3 is a schematic diagram 300 of an application scenario of the method for monitoring a global failure in a virtual gateway cluster according to the present embodiment. Network probes in cloud hosts are accessed based on physical machines, where the network probes include: 2 intranet physical machines 301 and 302, and 4 cloud servers 304, 305, 306 and 307. Here, the 2 intranet physical machines are used as sending ends, and the 4 cloud servers are used as receiving ends. One of the 4 cloud servers collects response data packets received by the 4 cloud servers in the process of the 2 intranet physical machines accessing the 4 cloud servers. Then, based on a preset monitoring index, the collected response data packets are analyzed in terms of the packet loss rate, delay, response time and data interruption rate to determine whether the virtual gateway cluster has a constant failure, a probabilistic failure, an increase in packet loss rate, an increase in communication delay or a long connection interruption.

According to the method for monitoring a global failure in a virtual gateway cluster provided by embodiments of the present disclosure, by setting a network probe in a target monitoring scenario, collecting a response data packet sent by the sending end probe to the receiving end probe via a target virtual gateway cluster, and analyzing the response data packet based on a preset monitoring index to determine whether a global failure occurs in the target virtual gateway cluster, the global failure in the virtual gateway cluster is monitored. By determining the target virtual gateway cluster based on the target monitoring scenario, global failure monitoring of the target virtual gateway cluster is more real and detailed. Compared with the existing technology, whether the service cooperation and device forwarding in a virtual gateway cluster is normal, and whether the entire virtual gateway cluster is normal may be monitored; and by setting the network probe in the target monitoring scenario, a failure problem of the virtual gateway cluster during network application may be directly and quickly discovered before the user. Compared with the existing technology where a failure point of each gateway is separately judged and then summarized and analyzed to find the failure problem, the speed of failure discovery is improved, and the efficiency of failure processing is further improved.

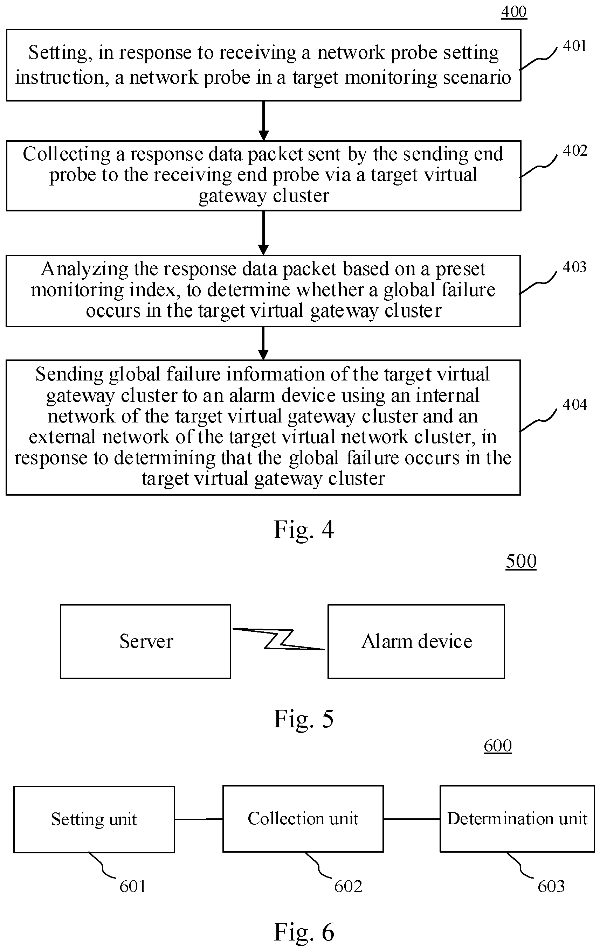

With further reference to Fig. 4, a flow of another embodiment of the method for monitoring a global failure in a virtual gateway cluster is illustrated. The flow 400 of the method for monitoring includes the following steps.

Step 401, setting, in response to receiving a network probe setting instruction, a network probe in a target monitoring scenario.

Step 402, collecting a response data packet sent by the sending end probe to the receiving end probe via a target virtual gateway cluster.

Step 403, analyzing the response data packet based on a preset monitoring index, to determine whether a global failure occurs in the target virtual gateway cluster.

In the present embodiment, the specific operations of steps 401 to 403 are substantially the same as the operations of steps 201 to 203 in an embodiment shown in Fig. 2, and detailed description thereof will be omitted.

Step 404, sending global failure information of the target virtual gateway cluster to an alarm device using an internal network of the target virtual gateway cluster and an external network of the target virtual network cluster, in response to determining that the global failure occurs in the target virtual gateway cluster.

In the present embodiment, in response to determining that the global failure occurs in the virtual gateway cluster, the executing body sends the global failure information of the virtual gateway cluster to the alarm device using the internal network of the virtual gateway cluster and the external network of the virtual network cluster. The executing body sends the global failure information of the virtual gateway cluster to the alarm device, and the alarm device then uses a configured alarm strategy to transmit alarm information to the terminal device, realizing a rapid discovery of the global failure in the virtual gateway cluster.

As can be seen from Fig. 4, compared with the embodiment corresponding to Fig. 2, the flow 400 of the method for monitoring a global failure in a virtual gateway cluster in the present embodiment uses the internal network where the virtual gateway cluster is located and the external network outside the virtual network cluster for information transmission, avoiding the problem that when the monitored virtual gateway cluster fails, alarm information of the monitored virtual gateway cluster cannot be transmitted because the transmission path of the network is unavailable.

With further reference to Fig. 5, the present disclosure provides a system for monitoring a global failure in a virtual gateway cluster, as shown in Fig. 5, the system includes a server and an alarm device. The server is configured to perform the method for monitoring a global failure in a virtual gateway cluster. The alarm device is configured to receive global failure information of a target virtual gateway cluster, and send out the global failure information of the target virtual gateway cluster through a configured failure alarm strategy.

For example, the alarm device may receive the global failure information in the target virtual gateway cluster. The global failure information includes: packet loss rate greater than 30%, delay greater than 300ms, response time greater than 10s, or interruption rate greater than 30%. Then, the alarm device uses a pre-configured failure alarm strategy to send the global failure information in the target virtual gateway cluster to the current staff on duty using telephone and Baidu hi group, to realize a rapid discovery of the global failure in the virtual gateway cluster.

With further reference to Fig. 6, as an implementation of the method shown in the above figures, an embodiment of the present disclosure provides an apparatus for monitoring a global failure in a virtual gateway cluster, and the apparatus embodiment may correspond to an method embodiment as shown in Fig. 2, and the apparatus may be specifically applied to various electronic devices.

As shown in Fig. 6, an apparatus 600 for monitoring a global failure in a virtual gateway cluster of the present embodiment includes: a setting unit 601, a collection unit 602 and a determination unit 603. The setting unit 601 is configured to set, in response to receiving a network probe setting instruction, a network probe in a target monitoring scenario, the network probe including a sending end probe and a receiving end probe. The collection unit 602 is configured to collect a response data packet sent by the sending end probe to the receiving end probe via a target virtual gateway cluster, the target virtual gateway cluster being determined based on the target monitoring scenario. The determination unit 603 is configured to analyze the response data packet based on a preset monitoring index, to determine whether a global failure occurs in the target virtual gateway cluster.

In the present embodiment, for specific processing and the technical effects thereof of the setting unit 601, the collection unit 602, and the determination unit 603 of the apparatus 600 for monitoring a global failure in a virtual gateway cluster, reference may be respectively made to the relevant descriptions of steps 201 to 203 in the embodiment corresponding to Fig. 2, and detailed description thereof will be omitted.

In some alternative implementations of the present embodiment, the determination unit includes: an extraction subunit, configured to extract monitoring data corresponding to the monitoring index in the response data packet based on the preset monitoring index; and a determination subunit, configured to analyze the monitoring data to determine whether the global failure occurs in the target virtual gateway cluster.

In some alternative implementations of the present embodiment, the global failure includes at least one of: a constant network failure, a network probabilistic failure, an increase in network packet loss rate, an increase in network communication delay, or a network long connection interruption.

In some alternative implementations of the present embodiment, the apparatus further includes: a sending unit, configured to send global failure information of the target virtual gateway cluster to an alarm device using an internal network of the target virtual gateway cluster and an external network of the target virtual network cluster, in response to determining that the global failure occurs in the target virtual gateway cluster.

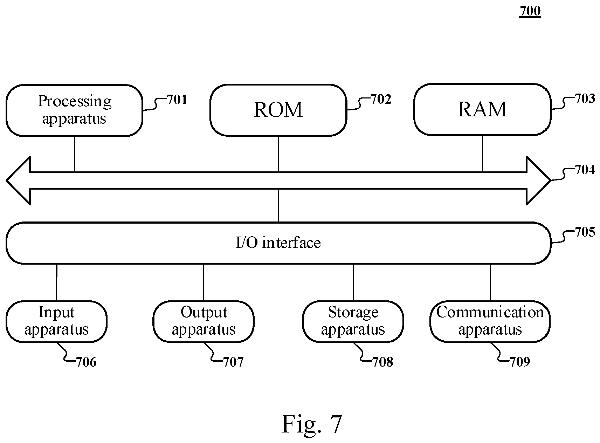

With further reference to Fig. 7, a schematic structural diagram of an electronic device 700 (for example, the server shown in Fig. 1) adapted to implement embodiments of the present disclosure is illustrated. The terminal devices in embodiments of the present disclosure may include, but are not limited to, mobile terminals such as mobile phones, notebook computers, digital broadcast receivers, PDAs (personal digital assistants), PADs (tablet computers), PMPs (portable multimedia players), or in-vehicle terminals (for example, in-vehicle navigation terminals) and fixed terminals such as digital TVs, desktop computers. The server shown in Fig. 7 is only an example, and should not bring any limitation to the functions and use scope of embodiments of the present disclosure.

As shown in Fig. 7, the electronic device 700 may include a processing apparatus (for example, a central processor, a graphics processor, etc.) 701, which may execute various appropriate actions and processes in accordance with a program stored in a read-only memory (ROM) 702 or a program loaded into a random access memory (RAM) 703 from a storage apparatus 708. The RAM 703 also stores various programs and data required by operations of the electronic device 700. The processing apparatus 701, the ROM 702 and the RAM 703 are connected to each other through a bus 704. An input/output (I/O) interface 705 is also connected to the bus 704.

Generally, the following apparatuses may be connected to the I/O interface 705: an input apparatus 706, including such as a touch screen, a touch pad, a keyboard, a mouse, a camera, a microphone, an accelerometer, or a gyroscope; an output apparatus 707 including such as a liquid crystal display (LCD), a speaker, or a vibrator; the storage apparatus 708 including such as a magnetic tape, or a hard disk; and a communication apparatus 709. The communication apparatus 709 may allow the electronic device 700 to perform wireless or wired communication with other devices to exchange data. Although Fig. 7 shows the electronic device 700 having various apparatuses, it should be understood that it is not required to implement or have all the apparatuses shown. More or fewer apparatuses may be implemented or provided instead. Each block shown in Fig. 7 may represent one apparatus, and may also represent a plurality of apparatuses as required.

In particular, according to embodiments of the present disclosure, the process described above with reference to the flow chart may be implemented in a computer software program. For example, an embodiment of the present disclosure includes a computer program product, which includes a computer program that is tangibly embedded in a computer readable medium. The computer program includes program codes for performing the method as illustrated in the flow chart. In such an embodiment, the computer program may be downloaded and installed from a network via the communication apparatus 709, or from the storage apparatus 708, or from the ROM 702. The computer program, when executed by the processing apparatus 701, implements the above mentioned functionalities as defined by the method of embodiments of the present disclosure.

It should be noted that the computer readable medium according to some embodiments of the present disclosure may be a computer readable signal medium or a computer readable medium or any combination of the above two. An example of the computer readable medium may include, but is not limited to: electric, magnetic, optical, electromagnetic, infrared, or semiconductor systems, apparatuses, elements, or a combination of any of the above. A more specific example of the computer readable medium may include, but is not limited to: electrical connection with one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In some embodiments of the present disclosure, the computer readable medium may be any tangible medium containing or storing programs, which may be used by, or used in combination with, a command execution system, apparatus or element. In some embodiments of the present disclosure, the computer readable signal medium may include a data signal in the base band or propagating as a part of a carrier wave, in which computer readable program codes are carried. The propagating data signal may take various forms, including but not limited to an electromagnetic signal, an optical signal, or any suitable combination of the above. The computer readable signal medium may also be any computer readable medium except for the computer readable medium. The computer readable medium is capable of transmitting, propagating or transferring programs for use by, or used in combination with, a command execution system, apparatus or element. The program codes contained on the computer readable medium may be transmitted with any suitable medium, including but not limited to: wireless, wired, optical cable, RF medium, etc., or any suitable combination of the above.

The computer readable medium may be included in the above electronic device, or a stand-alone computer readable medium not assembled into the electronic device. The computer readable medium carries one or more programs. The one or more programs, when executed by the electronic device, cause the electronic device to: set, in response to receiving a network probe setting instruction, a network probe in a target monitoring scenario, the network probe including a sending end probe and a receiving end probe; collect a response data packet sent by the sending end probe to the receiving end probe via a target virtual gateway cluster, the target virtual gateway cluster being determined based on the target monitoring scenario; and analyze the response data packet based on a preset monitoring index, to determine whether a global failure occurs in the target virtual gateway cluster.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In a circumstance involving a remote computer, the remote computer may be connected to a user's computer through any network, including local area network (LAN) or wide area network (WAN), or be connected to an external computer (for example, connected through the Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logical functions. It should be further noted that, in some alternative implementations, the functions denoted by the blocks may also occur in a sequence different from the sequences shown in the figures. For example, any two blocks presented in succession may be executed substantially in parallel, or they may sometimes be executed in a reverse sequence, depending on the functions involved. It should be further noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in embodiments of the present disclosure may be implemented by means of software or hardware. The described units may also be provided in a processor, for example, may be described as: a processor including a setting unit, a collection unit and a determination unit. Here, the names of these units do not in some cases constitute limitations to such units themselves. For example, the setting unit may also be described as "a unit configured to set, in response to receiving a network probe setting instruction, a network probe in a target monitoring scenario, the network probe including a sending end probe and a receiving end probe".

The above description only provides an explanation of the present disclosure and the technical principles used. The present invention is defined in the appended independent claims to which reference should be made. Advantageous features are set out in the appended dependent claims.

## Claims

1. A method for monitoring a global failure in a virtual gateway cluster, comprising:
setting (201, 401), in response to receiving a network probe setting instruction, a network probe in a target monitoring scenario, the network probe comprising a sending end probe and a receiving end probe;
collecting (202, 402) a response data packet sent by the sending end probe to the receiving end probe via target virtual gateways in a target virtual gateway cluster, the target virtual gateway cluster being determined based on the target monitoring scenario; and
analyzing (203, 403) the response data packet based on a preset monitoring index, to determine whether a global failure occurs in the target virtual gateway cluster, the preset monitoring index including at least one of: a packet loss rate, a delay, a response time, or an interruption rate.

2. The method according to claim 1, wherein the analyzing (203) the response data packet based on a preset monitoring index, to determine whether a global failure occurs in the target virtual gateway cluster, comprises:
extracting monitoring data corresponding to the monitoring index in the response data packet based on the preset monitoring index; and
analyzing the monitoring data to determine whether the global failure occurs in the target virtual gateway cluster.

3. The method according to claim 1 or 2, wherein the global failure comprises at least one of: a constant network failure, a network probabilistic failure, an increase in network packet loss rate, an increase in network communication delay, or a network long connection interruption.

4. The method according to any one of claims 1-3, further comprising:
sending (404) global failure information of the target virtual gateway cluster to an alarm device using an internal network of the target virtual gateway cluster and an external network of the target virtual network cluster, in response to determining that the global failure occurs in the target virtual gateway cluster.

5. An apparatus for monitoring a global failure in a virtual gateway cluster, comprising
a setting unit (601), configured to set, in response to receiving a network probe setting instruction, a network probe in a target monitoring scenario, the network probe comprising a sending end probe and a receiving end probe;
a collection unit (602), configured to collect a response data packet sent by the sending end probe to the receiving end probe via target virtual gateways in a target virtual gateway cluster, the target virtual gateway cluster being determined based on the target monitoring scenario; and
a determination unit (603), configured to analyze the response data packet based on a preset monitoring index, to determine whether a global failure occurs in the target virtual gateway cluster, the preset monitoring index including at least one of: a packet loss rate, a delay, a response time, or an interruption rate.

6. The apparatus according to claim 5, wherein the determination unit (603) comprises:
an extraction subunit, configured to extract monitoring data corresponding to the monitoring index in the response data packet based on the preset monitoring index; and
a determination subunit, configured to analyze the monitoring data to determine whether the global failure occurs in the target virtual gateway cluster.

7. The apparatus according to claim 5 or 6, wherein the global failure comprises at least one of: a constant network failure, a network probabilistic failure, an increase in network packet loss rate, an increase in network communication delay, or a network long connection interruption.

8. The apparatus according to any one of claims 5-7, further comprising:
a sending unit, configured to send global failure information of the target virtual gateway cluster to an alarm device using an internal network of the target virtual gateway cluster and an external network of the target virtual network cluster, in response to determining that the global failure occurs in the target virtual gateway cluster.

9. A computer readable medium, storing a computer program thereon, wherein the program, when executed by a processor (701), implements the method according to any one of claims 1-4.

## Patentansprüche

1. Verfahren zum Überwachen eines globalen Fehlers in einem virtuellen Gateway-Cluster, umfassend:
Einstellen (201, 401) einer Netzwerksonde in einem Zielüberwachungsszenario als Reaktion auf den Empfang einer Netzwerksondeneinstellanweisung, wobei die Netzwerksonde eine Sendeendsonde und eine Empfangsendsonde umfasst;
sammeln (202, 402) eines Antwortpakets, das von der Sendeendsonde an die Empfangsendsonde über virtuelle Ziel-Gateways in einem virtuellen Ziel-Gateway-Cluster gesendet wird, wobei der virtuelle Ziel-Gateway-Cluster auf Grundlage des Ziel-Überwachungsszenarios bestimmt wird; und
analysieren (203, 403) des Antwortpakets auf Grundlage eines voreingestellten Überwachungsindex, um zu bestimmen, ob ein globaler Fehler in dem virtuellen Ziel-Gateway-Cluster auftritt, wobei der voreingestellte Überwachungsindex mindestens eines von Folgendem beinhaltet: eine Paketverlustrate, eine Verzögerung, eine Reaktionszeit oder eine Unterbrechungsrate.

2. Verfahren nach Anspruch 1, wobei das Analysieren (203) des Antwortpakets basierend auf einem voreingestellten Überwachungsindex, um zu bestimmen, ob ein globaler Fehler in dem virtuellen Ziel-Gateway-Cluster auftritt, Folgendes umfasst:
extrahieren von Überwachungsdaten, die dem Überwachungsindex in dem Antwortdatenpaket entsprechen, basierend auf dem voreingestellten Überwachungsindex; und analysieren der Überwachungsdaten, um zu bestimmen, ob der globale Fehler im virtuellen Ziel-Gateway-Cluster auftritt.

3. Verfahren nach Anspruch 1 oder 2, wobei der globale Fehler mindestens eines der Folgendem umfasst: einen konstanten Netzwerkausfall, einen probabilistischen Netzwerkausfall, eine Erhöhung der Netzwerkpaketverlustrate, eine Erhöhung der Netzwerkkommunikationsverzögerung oder eine lange Netzwerkverbindungsunterbrechung.

4. Verfahren nach einem der Ansprüche 1 bis 3, ferner umfassend:
senden (404) von globalen Fehlerinformationen des virtuellen Ziel-Gateway-Clusters an eine Alarmvorrichtung unter Verwendung eines internen Netzwerks des virtuellen Ziel-Gateway-Clusters und eines externen Netzwerks des virtuellen Ziel-Netzwerkclusters als Reaktion auf das Bestimmen, dass der globale Fehler in dem virtuellen Ziel-Gateway-Cluster auftritt.

5. Vorrichtung zum Überwachen eines globalen Fehlers in einem virtuellen Gateway-Cluster, umfassend
eine Einstelleinheit (601), die dazu konfiguriert ist, als Reaktion auf das Empfangen einer Netzwerksondeneinstellanweisung eine Netzwerksonde in einem Zielüberwachungsszenario einzustellen, wobei die Netzwerksonde eine Sendeendsonde und eine Empfangsendsonde umfasst;
eine Sammeleinheit (602), die dazu konfiguriert ist, ein Antwortdatenpaket zu sammeln, das von der Sendeendsonde an die Empfangsendsonde über virtuelle Ziel-Gateways in einem virtuellen Ziel-Gateway-Cluster gesendet wird, wobei der virtuelle Ziel-Gateway-Cluster auf Grundlage des Ziel-Überwachungsszenarios bestimmt wird; und
eine Bestimmungseinheit (603), die dazu konfiguriert ist, das Antwortdatenpaket auf der Grundlage eines voreingestellten Überwachungsindex zu analysieren, um zu bestimmen, ob ein globaler Fehler in dem virtuellen Ziel-Gateway-Cluster auftritt, wobei der voreingestellte Überwachungsindex mindestens eines von Folgendem beinhaltet: eine Paketverlustrate, eine Verzögerung, eine Reaktionszeit oder eine Unterbrechungsrate.

6. Vorrichtung nach Anspruch 5, wobei die Bestimmungseinheit (603) umfasst:
eine Extraktionsuntereinheit, die dazu konfiguriert ist, Überwachungsdaten, die dem Überwachungsindex in dem Antwortdatenpaket entsprechen, auf Grundlage des voreingestellten Überwachungsindex zu extrahieren; und
eine Bestimmungsuntereinheit, die dazu konfiguriert ist, die Überwachungsdaten zu analysieren, um zu bestimmen, ob der globale Fehler in dem virtuellen Ziel-Gateway-Cluster auftritt.

7. Vorrichtung nach Anspruch 5 oder 6, wobei der globale Fehler mindestens eines von Folgendem umfasst: einen konstanten Netzwerkausfall, einen probabilistischen Netzwerkausfall, eine Erhöhung der Netzwerkpaketverlustrate, eine Erhöhung der Netzwerkkommunikationsverzögerung oder eine lange Netzwerkverbindungsunterbrechung.

8. Vorrichtung nach einem der Ansprüche 5-7, ferner umfassend:
eine Sendeeinheit, die dazu konfiguriert ist, globale Fehlerinformationen des virtuellen Ziel-Gateway-Clusters an eine Alarmvorrichtung unter Verwendung eines internen Netzwerks des virtuellen Ziel-Gateway-Clusters und eines externen Netzwerks des virtuellen Ziel-Netzwerkclusters als Reaktion auf das Bestimmen, dass der globale Fehler in dem virtuellen Ziel-Gateway-Cluster auftritt, zu senden.

9. Computerlesbares Medium, auf dem ein Computerprogramm gespeichert ist, wobei das Programm, wenn es von einem Prozessor (701) ausgeführt wird, das Verfahren nach einem der Ansprüche 1-4 implementiert.

## Revendications

1. Procédé de surveillance d'une défaillance globale dans un groupe de passerelles virtuelles, comprenant :
régler (201, 401), en réponse à la réception d'une instruction de réglage de sonde réseau, une sonde réseau dans un scénario de surveillance cible, la sonde réseau comprenant une sonde d'extrémité émettrice et une sonde d'extrémité réceptrice ;
collecter (202, 402) un paquet de données de réponse envoyé par la sonde d'extrémité émettrice à la sonde d'extrémité réceptrice via des passerelles virtuelles cibles dans un groupe de passerelles virtuelles cible, le groupe de passerelles virtuelles cibles étant déterminé sur la base du scénario de surveillance cible ; et
analyser (203, 403) le paquet de données de réponse sur la base d'un indice de surveillance prédéfini, pour déterminer si une défaillance globale se produit dans le groupe de passerelles virtuelles cible, l'indice de surveillance prédéfini comprenant au moins un élément parmi : un taux de perte de paquets, un retard, un temps de réponse ou un taux d'interruption.

2. Procédé selon la revendication 1, dans lequel l'analyse (203) du paquet de données de réponse sur la base d'un indice de surveillance prédéfini, pour déterminer si une défaillance globale se produit dans le groupe de passerelles virtuelles cible, comprend :
extraire des données de surveillance correspondant à l'indice de surveillance dans le paquet de données de réponse sur la base de l'indice de surveillance prédéfini ; et
analyser les données de surveillance pour déterminer si la défaillance globale se produit dans le groupe de passerelles virtuelles cible.

3. Procédé selon la revendication 1 ou 2, dans lequel la défaillance globale comprend au moins un élément parmi : une défaillance constante du réseau, une défaillance probabiliste du réseau, une augmentation du taux de perte de paquets du réseau, une augmentation du délai de communication du réseau, ou une interruption de connexion longue du réseau.

4. Procédé selon l'une quelconque des revendications 1 à 3, comprenant en outre :
envoyer (404) des informations de défaillance globale du groupe de passerelles virtuelles cible à un dispositif d'alarme en utilisant un réseau interne du groupe de passerelles virtuelles cible et un réseau externe du groupe de réseaux virtuels cible, en réponse à la détermination selon laquelle la défaillance globale se produit dans le groupe de passerelles virtuelles cible.

5. Appareil de surveillance d'une défaillance globale dans un groupe de passerelles virtuelles, comprenant une unité de réglage (601), configurée pour régler, en réponse à la réception d'une instruction de réglage de sonde réseau, une sonde réseau dans un scénario de surveillance cible, la sonde réseau comprenant une sonde d'extrémité émettrice et une sonde d'extrémité réceptrice ;
une unité de collecte (602), configurée pour collecter un paquet de données de réponse envoyé par la sonde d'extrémité émettrice à la sonde d'extrémité réceptrice via des passerelles virtuelles cibles dans un groupe de passerelles virtuelles cible, le groupe de passerelles virtuelles cibles étant déterminé sur la base du scénario de surveillance cible ; et
une unité de détermination (603), configurée pour analyser le paquet de données de réponse sur la base d'un indice de surveillance prédéfini, pour déterminer si une défaillance globale se produit dans le groupe de passerelles virtuelles cible, l'indice de surveillance prédéfini comprenant au moins un élément parmi : un taux de perte de paquets, un retard, un temps de réponse ou un taux d'interruption.

6. Appareil selon la revendication 5, dans lequel l'unité de détermination (603) comprend :
une sous-unité d'extraction, configurée pour des données de surveillance correspondant à l'indice de surveillance dans le paquet de données de réponse sur la base de l'indice de surveillance prédéfini ; et
une sous-unité de détermination, configurée pour analyser les données de surveillance pour déterminer si la défaillance globale se produit dans le groupe de passerelles virtuelles cible.

7. Appareil selon la revendication 5 ou 6, dans lequel la défaillance globale comprend au moins un élément parmi : une défaillance constante du réseau, une défaillance probabiliste du réseau, une augmentation du taux de perte de paquets du réseau, une augmentation du délai de communication du réseau, ou une interruption de connexion longue du réseau.

8. Appareil selon l'une quelconque des revendications 5 à 7, comprenant en outre :
une unité d'envoi, configurée pour envoyer des informations de défaillance globale du groupe de passerelles virtuelles cible à un dispositif d'alarme en utilisant un réseau interne du groupe de passerelles virtuelles cible et un réseau externe du groupe de réseaux virtuels cible, en réponse à la détermination selon laquelle la défaillance globale se produit dans le groupe de passerelles virtuelles cible.

9. Support lisible par ordinateur stockant un programme d'ordinateur sur celui-ci, dans lequel le programme, lorsqu'il est exécuté par un processeur (701), met en œuvre le procédé selon l'une quelconque des revendications 1 à 4.
